# EUROPEAN PATENT SPECIFICATION

(11) **EP 3 378 847 B1**
(45) Date of publication and mention of the grant of the patent: **01.09.2021**
(21) Application number: 17382143.0
(22) Date of filing: 21.03.2017
(51) Int. Cl.: C04B 41/70, C04B 41/00, C04B 41/52, C04B 28/00, F27B 9/36, C04B 111/00, C04B 111/82, C04B 111/80

(54) **PROCEDURE FOR DECORATING CERAMIC MATERIALS PRODUCED WITH INORGANIC POLYMERS**
VERFAHREN ZUR DEKORATION VON MIT ANORGANISCHEN POLYMEREN HERGESTELLTEN KERAMISCHEN MATERIALIEN
PROCÉDÉ PERMETTANT DE DÉCORER DES MATÉRIAUX CÉRAMIQUES PRODUITS AVEC DES POLYMÈRES INORGANIQUES

(43) Date of publication of application: 26.09.2018
(73) Proprietor: Sociedad Anónima Minera Catalano-Aragonesa, 50001 Zaragoza (ES)
(72) Inventor: CABALLERO LÓPEZ, Miguel Ángel, 50001 Zaragoza (ES); FERRANDO MOLINOS, Fidel, 50001 Zaragoza (ES); PÉREZ APARICIO, Joaquin Javier, 50001 Zaragoza (ES); TOLOSA CORTÉS, José Ignacio, 50001 Zaragoza (ES)
(74) Representative: Schäfer, Matthias W.

(56) References cited:
- EP-A1- 2 727 894
- WO-A1-2007/101900
- US-B2- 7 037 868

## Description

This description relates, as its title indicates, to a procedure for decorating ceramic materials produced with inorganic polymers, based on the use of a combined ceramics kiln. This way, ceramic materials can be obtained with mechanical and aesthetic properties that are in line with what the ceramics industry can currently use, but with thermal treatments at much lower temperatures, which affords considerable energy savings.

### Field of the invention

This invention relates to the field of the industrial manufacture of decorated ceramic materials based on inorganic polymers, also frequently referred to in technical literature as geopolymers, and especially on those obtained by means of alkaline activation of thermally treated meta-clays.

### Current State of the Art

To understand this procedure it is useful to first define a series of terms used in the description:
Geopolymers - These are inorganic synthetic aluminosilicate polymers that result from the chemical reaction that occurs in highly alkaline conditions between an aluminosilicate powder and an activating solution (based on a mixture of sodium or potassium hydroxide and an alkaline silicate of sodium or of potassium, respectively) in ambient conditions. In the laboratory, metakaolin is normally used as the base material for synthesising geopolymers and is generated by the thermal treatment of kaolinite at temperatures of between 550°C and 950°C.
Alkaline activation - This is a chemical process in which silico-aluminous powder material is mixed with an alkaline activator to generate a paste that is capable of setting and hardening in a short period of time. The main reaction product in the process is an alkaline silicoaluminate gel (N-A-S-H gel), amorphous to XRD, which displays a three-dimensional structure. These materials, which are generically termed alkaline inorganic polymers and also geopolymers, geocements and zeoceramics etc., may display a wide variety of properties and characteristics - high initial mechanical strength, resistance to fire, to acids, etc. - depending on the conditions in which the process takes place (type of activator, temperature, time, etc.).
Silico-aluminous material - In general terms, any material that contains silicon and aluminium. In this specific context, the term refers to materials that are able to react at ambient temperature with the alkaline activator. Typically it relates to pozzolanic products such as fly ash, meta-clays and perlite.
Meta-clays - These are clays treated at a high temperature but not so high that the structure collapses. The best known one is metakaolin, which is obtained through the treatment of kaolin at a temperature in the range of 550-950°C to bring about the dehydroxylation of the kaolinite and the reorganisation of its structure, although there are references for meta-clays based on smectites and illites. Kaolin, smectites and illites are typical silico-aluminous clays. As always, these clays may have a multitude of minority components in their composition, such as sands, feldspars, carbonates, opal, quartz, etc.
Clays - Mineralogically, a specific group of phyllosilicates are termed clays. The structure of these phyllosilicates is based on the stacking of planes of oxygen and hydroxyl ions. The tetrahedral groups of SiO₄⁴⁻ bond and share three of their four oxygen atoms with other neighbouring ones, forming infinitely extending layers with the formula Si₂O₅²⁻, which constitute the basic unit of phyllosilicates. The tetrahedral silicon may in part be replaced by Al³⁺ or Fe³⁺. These tetrahedral layers bond to other octahedral layers such as gibbsite or brucite. The connecting plane between both layers is formed by the apical oxygen atoms not shared by the SiO₄⁴⁻ tetrahedra and by the OH⁻ groups of the octahedral layer.

Similar bonding may occur on the opposite surface of the octahedral layer. Thus, phyllosilicates may be formed either by two layers, one tetrahedral and one octahedral layer, known as 1:1 phyllosilicates, or by three layers, one octahedral and two tetrahedral, known as 2:1 phyllosilicates. The unit formed by the bonding of these two or three layers is called a sheet. If all the octahedral sites are filled, the sheet is termed trioctahedral. If only two thirds of these positions are occupied and the rest are vacant, it is termed dioctahedral.

The group formed by candites and serpentines are 1:1 phyllosilicates. The former comprises minerals such as kaolinite, nacrite, dickite and halloysite. 2:1 phyllosilicates comprise pyrophyllite-talc groups, smectite, vermiculite, illite, mica and chlorite.

Sepiolite and palygorskite also belong to this group of minerals, although they are structurally different to the rest of the phyllosilicates. Structurally, they are formed by mica-type discontinuous sheets. Unlike the rest of the phyllosilicates, which are laminar, they have a fibrous habit, as the basal layer of oxygen atoms is continuous, but the apical oxygen atoms are periodically reversed every eight octahedral positions (sepiolite) or every five positions (palygorskite). This reversal causes the interruption of the octahedral layer, which is discontinuous.

Associated with the presence of clays are minerals such as sodium feldspar, potassium feldspar, plagioclases, quartz, carbonates (calcite, dolomite, siderite and others), chlorites, pyrite, iron oxides (hematites, goethite), gibbsite, sericite and vermiculite, etc. The industry has developed well-known mechanical, physical and chemical methods for the benefit and purification of clays.

Alkaline activator - It refers to an MOH (M= Na, K, Rb, Cs) solution with a typical concentration of 8-10 M. It can be used on its own or in combination with sodium or potassium silicate, either pre-prepared or starting from its components. It provides the amount of alkaline metal required for the reaction and increases the amount of reactive silicon (through the silicate). The typical concentration of silicate in the MOH solution is 15%, although greater or smaller amounts may be used.

Sodium silicate/potassium silicate - Soluble silicates may be found in very different forms and compositions. Depending on the nature of the alkaline ion, sodium silicates nSiO₂:Na₂O and potassium silicates nSiO₂:K₂O are differentiated.

Filler - Here they are referred to as materials that do not form part of the reaction but which improve end properties (silicas, sands, quartz, feldspars, feldspar sands, other clays, fibres, etc).

Curing - In this context, curing refers to treatment of the sample at low temperatures (20°C to 90°C) and high relative humidity (40% to 100%) for a time period of between 1 hour and 7 days, preferably between 5 and 24 hours, and more preferably between 20 and 24 hours.

Combined ceramic kiln - In this context, it refers to the combination of a continuous ceramic kiln for the processing of ceramic pieces, which can use as the basic heating power source either burners, electric heating elements or any other source, coupled to which is a heat radiation emitting device of any type, that is able to achieve a rise in temperature locally on the surface of the piece.

Combined kiln with laser radiation scanning (abbreviated to LRS Combined Kiln) - In this context this refers to a variation on a combined ceramic kiln, consisting of the combination of a continuous ceramic kiln for the processing of ceramic materials, which can use as the basic heat power source either with burners, electric elements or any other conventional system, to which a laser radiation emitting device is coupled which, by means of an oscillatory scanning process, provides an extra source of heat, thus generating a significant increase in temperature over a narrow band in the firing area.

Ceramic coating - Called as such after the material on which it is usually employed and also known, generically, as glaze, it refers to the whole range of silicate-based inorganic materials that are applied on ceramic materials and which, following thermal treatment (firing), acquire a glassy or glass-crystalline nature.

### Background of the invention

There are various patents and scientific publications relating to inorganic polymer applications. The first reference to this type of compound dates from mid-20th century (V. D. Glukhovsky: "Soil silicates", 1959, Kiev, Gosstroyizdat Ukrainy Publishing), although it is only in the last few years that greater interest appears to have been taken in them. Some general papers on inorganic polymers, termed geopolymers, are listed hereunder:
- H. Xu. Ph D. Thesis. "Geopolymerisation of aluminosilicate minerals". University of Melbourne, Department of Chemical Engineering, 2002
- J. Davidovits." Geopolymer". Chemistry & Applications. 2008
- J. Davidovits." "30 years of successes and failures in geopolymer applications. Market trends and potential breakthroughs", Proc. Int. Conf. Geopolymer 2002, Melbourne, Australia, October 2002.

- Behzad Majidi. "Geopolymer technology, from fundamentals to advanced applications: a review". Materials Technology 2009, 24, 2, 79-87
- Khale, R. Chaudhary. "Mechanism of geopolimerization and factor influencing its development: a review". J. Mater Sci. (2007), 42, 729-746.
- *"*Alkali-activated geopolymers: A literature review". Julio 2010. Air Force Research Laboratory. Materials and Manufacturing Directorate.
- Miladin Radovic et al. Effects of Water Content and Chemical Composition on Structural Properties of Alkaline Activated Metakaolin-Based Geopolymers. J. Am. Ceram. Soc., 1-9 (2012)

In an absolutely predominant fashion, the study of geopolymers has always focused on them as an environment-friendly alternative to cement, a subject that is already widely known. A great number of references on the subject are to be found, such as patents:
- US2012156381A1 *"Geopolymer mortar and method"*
- US2012152153A1 *"Geopolymer composite for ultra-high performance concrete"*
- US2012037043A1 *"Construction materials and method of production",*
in which their most valuable characteristics are stated as being a procedure that does not generate CO₂ and that they possess improved properties in terms of mechanical strength, durability, resistance to weathering agents, resistance to fire, and heat and sound insulation. Similarly, they have been proposed as alternatives for prefabricated structures of various shapes.

Other known applications are related to the fact that these products are chemically similar to zeolites and they have been proposed as waste absorbents and/or inertising agents, for radioactive waste in particular, as catalysts for cracking in oil refining and as flame retardants, as detailed in the following patents:
- FR2651270 *"Fireproof structure, in particular for* a *door, window or the like"*
- GB2482732 *"Building component with fire retardant foam"*
- DE102004051712 *"Production of a body having a ceramic base body used in chimney construction comprises arranging a molding tool in the region of an opening of the base body, pouring a geopolymer mortar into the tool, hardening and removing the tool"*

Finally, some advanced technical ceramic applications have also been described, especially applied to aeronautics, Formula 1 etc., as described, for example, in the following patents:
- WO2005019130A1 *"Geopolymers and methods for their production".*
- MX2008001086A1 *"Photoluminescent geopolymer".*
- US7846250B2 *"Geopolymer and CO₂ storage"*
- US2011132230A1 *"Geopolymer precursor dry mixture, package, processes and methods".*

Likewise, the prior article shows that alkali activation of meta-clays is already known. A number of publications exist on obtaining ceramic materials by means of such chemical reactions:
- WO2006121823A2 *"Geopolymer composites and structures formed therefrom"*
- WO8303093A1 *"Method for the manufacture of ceramics decorated with silicoaluminate geopolymers."*
- US4888311A *"Ceramic-ceramic composite material and production method"*
- US2007221100A1 *"Process for the preparation of self-glazed geopolymer tile from fly-ash and blast furnace slag*
- *"*Alkaline activation of metakaolin. The effect of the addition of soluble silicate and of the curing temperature". Bol. Soc. Esp. Ceram. V., 47, 1, 35-43 (2008)
- *"*Formation of Ceramics from Metakaolin-Based Geopolymers. Part I: Cs-Based Geopolymer". J. Am. Ceram. Soc., 92 [1] 1-8 (2009)
- *"*Formation of Ceramics from Metakaolin-Based Geopolymers. Part II: K-Based Geopolymer". J. Am. Ceram. Soc., 92 [3] 607-615 (2009)

However, in all the above cases, the material was formed by methods involving formwork or compression, both well-known methods, but the technical possibility of extrusion is not discussed.

There also exist a number of papers where extrusion is used in geopolymers, though not to obtain ceramic materials:
- WO2011110834A1 *"Window or door frame"*
- EP2209963B1 *"Extruded geopolymer frame profiles for windows or doors"*
- *"*Short Fiber Reinforced Geopolymer Composites Manufactured by Extrusion". Journal of materials in civil engineering. November/ December 2005.

However, these publications only refer to the manufacture of profiles for windows or doors, without including any specific process for the treatment of materials.

Patent application EP2727894A1 *"Forming of ceramic materials made with inorganic polymers"* describes the forming of inorganic polymers by means of an extrusion process to obtain materials with the technical and aesthetic properties required in ceramic materials. The application describes the introduction of a plastic (non-calcined) clay in the formula as the differentiating factor that enables the ceramic properties to be obtained (in particular mechanical strength).

Obviously, given that until now the technique of inorganic polymers has concentrated almost exclusively on their use as substitutes to traditional cement, little attention has been paid to the decorating of these items. In order to address the use of inorganic polymers as ceramic pieces and more specifically, as floor and wall tiles, a procedure is required which enables diverse decorations to be obtained with glassy finishes, different colours and textures (matt or gloss) and even special effects, such as surfaces with a metallic gloss or lustre, as indeed already exist on the market with conventional ceramic pieces not based on inorganic polymers.

Obviously, the question of ceramic pieces based on inorganic polymers being subjected to any of the classic ceramic processes based on glazes, frits, engobes and lastly inkjet inks, has been raised. However, those methods have the serious drawback that they always require processing in ceramic kilns at high temperatures (typically 950°C to 1300°C), which would mean losing the intrinsic advantage of energy savings that obtaining ceramic materials from inorganic polymers affords. An additional problem also to be taken into consideration is that many of the proposed formulas for obtaining inorganic polymers lose mechanical properties if they are subjected to temperatures in that range (950°C to 1300°C).

Some attempts have been made to try and bypass these problems. The most notable attempts to obtain inorganic polymer decoration that does not require the use of high temperatures have been carried out in several different ways:
- The use of vitreous materials in the composition. Forming the piece by moulding and then vibrating. In the curing process these vitreous materials diffuse through the piece, producing a face with a shiny appearance, usually known as *self-glazed geopolymer"* such as, for instance, in US20070221100A1*,"Process for the preparation of self-glazed geopolymer tile from fly ash and blast furnace slag".* The drawback lies in that the forming method does not allow ceramic materials with the required mechanical properties to be obtained and furthermore, the range of available decorating items is very limited.
- Use of special materials in the composition that provide decorative effects. Such is the case of patent MX2008001086A1 "Photoluminescent Geopolymer". Apart from the problems already discussed in the previous point, a large amount of photoluminescent material is required, which increases the final cost.
- The use of specific equipment able to afford the piece an aesthetic appearance on one face: the clearest example is the use in dry or semi-plastic pressing systems of a very smooth surface opposite the piston that applies the pressure onto the geopolymer material. This leads the face in contact with that surface to also acquire a very smooth appearance and thus a shiny surface can be obtained after curing. Apart from the problems mentioned above, this system is difficult to transfer to the industrial production of ceramic materials (tiles) in service today.

Mention should also be made of the use of ground inorganic polymers to obtain suspensions with which to coat ceramic pieces and to provide an enamel surface after applying a standard heat treatment for the ceramics industry: ("Effect on strength and hardness of clay ceramic substrate after treatment using kaolin based geopolymer glaze", Key Engineering Materials Vols. 594-595 (2014) pp 575-580).

The use of inorganic polymers as ceramic materials, such as floor tiles, is an interesting way of improving energy efficiency in the ceramic process without any loss of mechanical properties, but in order to continue retaining the tremendous aesthetic and chromatic variability that the ceramic industry makes possible today, it is necessary to provide a new procedure that enables the decoration of inorganic polymers.

The procedure presented in this description is based on decorating ceramic products obtained from inorganic polymers by the use of a combined ceramic furnace, which combines a continuous kiln for processing ceramic materials with a device that emits electromagnetic radiation as a source of heat.

A laser, which stands for "light amplification by stimulated emission of radiation", can be used as the emitter of such electromagnetic radiation. In this definition, the term "light" does not only apply to the range of visible light but refers to electromagnetic radiation in general, over all kinds of frequencies, which in addition to visible light includes infrared, ultraviolet, X rays and Gamma rays.

Laser is a tool that is frequently used to process materials, common practice being to employ laser for cutting, marking, welding and modifying the surface of materials. The laser system provides reliability and enables processes with significant environmental advantages to be developed. The technological advances taking place in the development of new laser systems open up new opportunities for the obtainment of innovative materials with better properties.

Laser is a tool that has also been used in the processing of conventional ceramic and glass materials, of which the following patents and publications are worthy examples:
- US6064034A. *"Laser Marking Process for Vitrification of bricks and other vitriscent objects"*
- US8232502B2. *"Laser engraving of ceramic articles"*
- *"*Laser machining of structural ceramics - A Review", Journal of the European Ceramic Society, 29, 969-993 (2009)
- *"*Laser Machining of Structural Ceramics: Computational and Experimental Analysis", University of Tennessee (2009).
- ES2529090. *"Procedimiento de impresión directa destinada al esmaltado y decoración"* [*Direct printing procedure for enamelling and decoration"*].

Given the intrinsic properties of ceramic materials, in many cases these laser-based processes induce large temperature gradients in the sample, which may be responsible for the appearance of cracks and flaws, thus hindering their end use. Some of these documents, such as ES2529090, for instance, specifically claim further high-temperature heat treatments subsequent to the shaping of the ceramic piece, which increases the risk of mechanical problems and fractures.

In Patent WO2007 / 101900A1 *"Continuous furnace with coupled laser for the surface treatment of the materials",* the combination of a laser and a continuous kiln for the processing of ceramic, refractory and glass materials is presented. By making simultaneous use of laser radiation on the piece while it is moving inside a conventional continuous kiln, it is possible to achieve extremely high temperatures on the surface of the sample, thus keeping the piece at a temperature such that, with adequate control over processing parameters, avoids the accumulation of stresses associated with the temperature gradients that are liable to generate the formation of cracks, with the consequent deterioration of the piece's mechanical properties.

In addition, this combination of kiln and laser allows for the design of treatments that are not possible with conventional processing methods or at lower temperatures than those required when using these methods. It also opens the door to designing materials that can achieve higher value properties.

In this way, this combination of kiln and laser means that the ceramic kiln itself does not have to reach the temperature necessary for the reactions to occur that allow enamels, engobes, frits, inks, etc. to produce the required ceramic effect - that energy is provided by laser radiation.

However, in terms of decorating conventional ceramic materials, this equipment does have the drawback that the temperature at which the ceramic kiln part needs to work is still too high. In order to achieve a good interaction between the ceramic piece and the decorative items, the temperature difference between the area in the conventional ceramic kiln (which fires the piece) and the laser device (which produces the decorative effect) cannot be greater than 50 °C - 100 °C. This means that the ceramic kiln part operates at a minimum temperature of 950 °C, and indeed typical working temperatures are usually in the environment of 1100 °C - 1250 °C. The greatest energy savings that could be obtained would occur when it is used at 950 °C but with the disadvantage that it would only enable ceramic materials with low range mechanical properties to be produced.

In order to produce ceramic materials with good mechanical properties, a double firing process would be required. In the first firing stage, the ceramic substrate would be treated at a suitable temperature to ensure it yields good mechanical properties (typically 1100 °C to 1300 °C), before applying the items that constitute the decorative part and re-firing in the LRS kiln. The kiln part could now work at low temperature, while the laser part could provide the precise temperature increase to obtain the decorative effect. Obviously, this temperature would always be higher than that used in the first firing. However, these double firing processes significantly increase energy consumption as well as the economic costs associated with such production.

Furthermore, an additional problem when using high temperature processes in most formulations of inorganic polymers obtained from meta-clays that do not include a plastic clay in their composition, is that cracks, fractures or loss of mechanical properties are frequently seen, as noted in a number of publications:
- *"*Comparative performance of geopolymers made with metakaolin and fly-ash after exposure to elevated temperatures". Cem. Concr. Res. 96 390 54 01 /86
- *"*Thermal evolution of metakaolin geopolymers: Part 1 - Physical evolution" J. Non-Cryst. Solids 352 (52-54) (2006) 5541-5555.
- *"*The thermal evolution of metakaolin geopolymers: Part 2 - phase stability and structural development". J. Non-Cryst. Solids 353 (22-23) (2007) 2186-2200.
- *"*Thermal stability of geopolymers used as supporting material for TiO2 film coating through sol-gel process: Feasibility and improvement". Constr. Build. Mater. 1.522 - 1.533

These cracks, fractures or losses of mechanical properties cause a high failure rate that results in the process having a higher economic cost.

### Description of the invention

The problems that exist nowadays in regard to the high energy consumption and economic costs traditionally associated with the decoration of ceramic materials based on inorganic polymers,are solved by a procedure having the features of claim 1. Advantageous embodiments are claimed in the dependent claims.

The characteristics of the ceramic pieces obtained from inorganic polymers allow for the gap between the temperature at which a conventional ceramic kiln operates and the temperature provided by the mixed ceramic kiln in the ceramic kiln part to be widened. In this way, the working temperature in the ceramic kiln part of the mixed ceramic kiln can be reduced, which has traditionally been the largest source of energy consumption.

A mixed ceramic kiln enables electromagnetic radiation, preferably laser light, to be projected locally on a ceramic piece produced with inorganic polymers when it is displaced inside a ceramic kiln. By employing suitable means to control the radiation and displacement parameters, temperatures up to 1200 °C can be achieved on a strip of the surface of the ceramic piece running perpendicular to the direction of the displacement. The kiln is fitted with a displacement system, normally based on rollers, that enables the piece to be moved so that this strip runs along the entire surface of the piece.

The decoration procedure presented here is characterized by the use of a ceramic coating on the piece previously produced with inorganic polymers. This coating constitutes the decorated part and comprises different layers of materials (enamels, engobes, frits, inks, etc.) which, when melted onto the piece with the aid of the temperature increase on the surface provided by local radiation, produce the finish (vitreous or glass-crystalline) with the desired decorative effects. In order to achieve perfect interaction between the inorganic polymer substrate and these layers of ceramic materials, the inorganic polymer base is subjected to a heat treatment in the ceramic kiln part of the LRS kiln. This heat treatment is carried out at lower temperatures than is customary, between 600°C and 800°C. The layers of ceramic materials, which are to define the decoration on the ceramic piece, are subjected to laser radiation and so the temperature in that decorative part is higher and can reach up to 1200°C. That way, ceramic products such as tiles can be produced with thermal treatments of between 600°C and 800°C, offering both improved mechanical properties and the full range of decoration possibilities in terms of effects and colours offered by the ceramic industry today.

This decorating procedure based on the use of a mixed ceramic kiln is viable for any inorganic polymer, both with regard to composition and to forming system, such as moulding, dry pressing, semi-plastic pressing and extrusion. Preferably, the formulation used is one of those described in EP2727894A1 *"Forming of ceramic materials made with inorganic polymers".* Such composition contains a plastic (not thermally treated) clay that allows for an extrusion process of ceramic quality. But it is also applicable to the other forming methods listed above (moulding, dry pressing and semi-plastic pressing). Any skilled operator of the technique would be able to condition the formula by varying the liquid/solid ratio to obtain the appropriate geopolymer paste for each of those systems. From the point of view of its mechanical properties, the presence of plastic clay assures the quality of the piece when subjected to heat treatments of between 600 °C and 800 °C, with no cracks, fractures or loss of mechanical properties being observed.

### Advantages of the invention

The decorating procedure for materials produced with inorganic polymers presented herein has many advantages over the processes in service today, the most important and remarkable of such benefits being that ceramic materials can be created with the same mechanical and aesthetic properties as the ceramic industry uses nowadays but with heat treatments at much lower temperatures than those used in conventional ceramics, thus affording considerable energy savings.

These energy savings result in lower process costs to produce the ceramic materials and therefore in greater profitability.

Another important advantage of the procedure lies in its reliability and flexibility, since it allows for the full range of current decoration possibilities to be implemented in a more energy efficient manner.

On top of that, an additional benefit should not be overlooked, namely that it only requires a radiation module to be coupled to a conventional ceramic kiln, thus reducing the need for large capital outlays and facilitating its rapid pay-back.

It should also be taken into account that the procedure described enables the full range of possible decorative coatings available to today's ceramic industry in terms of effects and colours to be used with inorganic polymers.

The procedure described herein has the advantage that it allows for the full range of decorative coating possibilities available to today's ceramic industry to be used. In this regard, it should be noted that the coatings most widely used to decorate ceramic tiles are glazed enamels, which are designed to be fired in cycles with maximum temperatures of between 1050 °C and 1200 °C which are perfectly achievable by adding the heating power of radiation to the temperature of the above-mentioned heat treatment stage, i.e. between 600 °C and 800 °C. That way, any glaze used to decorate ceramic tiles is also eligible to be used to decorate geopolymer pieces, simply by adapting the power of the laser radiation. However, the procedure described here offers an additional advantage, in that it makes it possible to use low-temperature glazes, between 800 °C and 1050 °C, with a minimum energy contribution from the laser. This type of low-temperature glazing cannot be used in the decoration of standard ceramic tiles
unless it is implemented by a second firing after the firing of the actual paste, a technique known as double firing and which has largely been deprecated due to its higher energy costs.

### Description of the figures

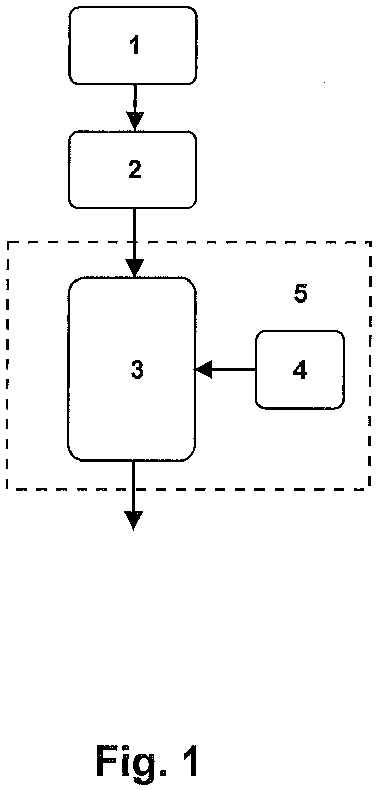

In order to provide clearer understanding of the object of this invention, the preferred practical embodiment of the procedure for decorating ceramic materials produced with inorganic polymers is shown in the appended drawing, where Figure 1 is a simplified diagram of the various stages involved in the procedure.

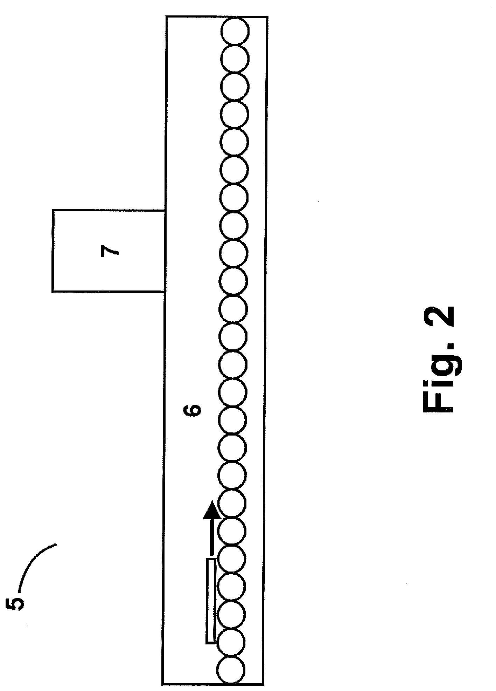

Figure 2 shows a simplified block diagram of a mixed ceramic kiln.

### Preferred embodiment of the invention

The procedure for decorating ceramic materials produced with inorganic polymers as embodied in this invention basically comprises
a forming stage (1) when the ceramic material is formed into a piece,
a preparation stage (2) when the coating is prepared,
a heat treatment stage (3), and
a local radiation stage (4) carried out during the heat treatment stage and coinciding with when the piece passes through the higher temperature zone in the kiln.

In the forming stage (1), a piece of ceramic material is formed from an inorganic polymer by any method currently used in the ceramic industry from the range consisting of moulding, dry pressing, semi-plastic pressing and extrusion. The preferred embodiment foreseen is one in which, in the forming stage (1), a piece of ceramic material is formed by an alkaline activation process of thermally-treated meta-clays that comprises extrusion, low temperature curing, and drying of an inorganic polymer consisting of a silico-aluminous material including meta-clays, pozzolanic materials or a combination of both, with an activator solution.

Subsequently, in the coating preparation stage (2), different successive layers of glazed enamels chosen from the range of enamels, engobes, frits, inks or a combination thereof, are applied to the piece obtained in stage 1.

The process then continues in a mixed ceramic kiln (5), where the heat treatment stage (3) and the local radiation stage are carried out.

The mixed ceramic kiln (5) used comprises a ceramic kiln (6) with linear movement of the piece and which is equipped with at least one radiation heating module (7) in the area where the highest temperatures in the ceramic kiln (6) are reached. The ceramic kiln (6) part of the mixed ceramic kiln (5) is one of any of the types currently used in the ceramic industry and may be chosen from the range of gas-fired, electric or microwave kilns. The radiation heating module (7) in the mixed ceramic kiln (5) works with electromagnetic radiation and may be selected from the range of units based on laser, UV ultraviolet, IR infrared, microwave, RF radiofrequency, or a combination of several of the above.

In a preferred embodiment of the procedure, a mixed kiln with laser radiation is used as the mixed ceramic kiln (5). The LRS kiln is similar to a conventional kiln with linear movement of the piece and electric heating elements. The linear movement of the piece takes place by means of a series of rollers that are driven by a motor-gearbox-pinions-chain mechanical system. The LRS kiln is divided into different zones with controlled temperature so that the full treatment cycle can be performed from the piece entering the kiln in one area until it exits the opposite side of the kiln, thus simulating an actual industrial furnace as much as possible. There is an opening in the top of the kiln in the highest temperature area through which the laser beam penetrates. The laser module used in the examples is a CO₂ Rofin SLAB laser, with a power rating of 1000 W and a 1200 mm lens. The laser beam depicts a path on the piece in the shape of circles measuring 3 mm in diameter, at a frequency of 100 Hz and with a beam speed of 25 m/s.

The heat treatment stage (3) is when the ceramic material is actually fired and is carried out at temperatures of between 600 °C and 800 °C.

The local radiation stage (4), which takes place during the heat treatment stage (3) coinciding with when the piece passes through the area with the highest temperature, produces an increase in surface temperature on the piece that fires the decorative coating without affecting the rest of the piece. This local radiation stage (4) is performed by generating a temperature on the surface of the piece of between 1050 °C and 1200 °C.

The procedure described above enables the full range of possibilities as far as decorative coatings available to the ceramics industry today are concerned to be used on ceramic materials obtained with inorganic polymers. In this sense, it should be noted that the coatings usually used for decorating ceramic tiles are glazes designed to be fired in maximum temperature cycles of between 1050 °C and 1200 °C, which are perfectly achievable by adding the heat power of the local radiation stage (4) to the temperature of the afore-mentioned heat treatment stage (3) of between 600 °C and 800 °C. With this procedure, any of the glazes used to decorate ceramic tiles could be employed in the decoration of ceramic pieces obtained from inorganic polymers, simply by adapting the power rating of the local radiation stage (4) to obtain the temperature gain required for the coating. This procedure allows the use of lower-temperature glaze coatings of between 800 °C and 1050 °C, with minimum additional energy supplied by the local radiation stage (4).

Any skilled worker in the field will readily understand that certain features of different embodiments can be combined with features of other possible embodiments, provided that such a combination is technically possible.

The following examples described hereunder are given as further information about the research and experiments carried out that led to this decoration procedure specifically adapted to ceramic materials based on inorganic polymers being developed:

### Example 1

This example illustrates the preparation of ceramic pieces produced with inorganic polymers on which the decoration process in Example 2 is subsequently carried out. AC1 is a clay containing kaolinite, illite and montmorillonite, all of which are silico-aluminous clays, treated at 850 °C for 2 hours and ground to a particle size such that the residue content at 63 µm is less than 25%.

A-1 is a clay with a kaolinite content of over 40% but any type of sufficiently plastic clay can be used.

2,400 g of AC1 and 600 g of A-1 were mixed with 1330 g of 10M NaOH and 236 g of a sodium silicate solution (composition by weight being 25.5-28.5% SiO₂, 7.5-8.5% Na₂O and density of 1.296 - 1.396 g/cm³ at 20 °C) for 12 minutes.

To obtain specimens formed by extrusion, a universal test machine was used, in which a rigid cylinder coupled to a rectangular extrusion die measuring 100 mm x 5 mm was attached. A rigid rod attached to a load cell was displaced through the cylinder at a speed of 15 mm/min. With the above arrangement, 5 mm thick and 100 mm wide parallelepiped-shaped specimens were formed by extrusion and these specimens were then cut to a length of 100 mm.

Once the specimens were obtained, they were subjected to the curing process:
- Time: 20 hours
- Temperature: 85 °C
- Relative Humidity: 100%

Following the curing stage, the samples were kept in ambient conditions for a minimum of 24 hours.

### Example 2 (not according to the invention)

This example describes how the decorative features were applied to the ceramic pieces produced with inorganic polymers in Example 1 before being subjected to heat treatment in an LRS kiln.

*Substrate:* Piece produced with inorganic polymers, surface area of 10 x 10 cm² and 5 mm thick.

*Coating (decoration):* The vitreous or glaze-crystalline coating is prepared by superimposing 3 layers on each other:
1) Low temperature engobe composition, as per the formula in Table 1:

**Table 1. Composition of the engobe layer**

| **Component** | **% by weight** |
|---|---|
| Opaque frit for 1050 °C | 30 |
| Nephelin | 50 |
| Clay | 20 |

2) Transparent gloss enamel, made from a borax frit for a service temperature of 980 °C - 1020 °C of use temperature.
3) Decoration with digital blue and black ceramic inks using a geometric design with a combination of grey and blue hues.

*Firing in a lab kiln:* in an LRS laboratory kiln with rollers, measuring a total 10 metres in length, fitted with electric heating elements and equipped with a 1000 W maximum power CO₂ laser source.

*Kiln conditions:* Temperature in the treatment zone of 450 °C (temperature provided by the electric elements) and specimen displacement speed of 8.5 m per hour. Thus the specimen remained in the kiln for a total of 70 minutes, with 10 minutes of that time at maximum temperature.

*Laser treatment:* A CO₂ laser with a power focus rating of 700 W, beam displacement speed on the specimen of 25 m per sec., displacement mode with wobbling (defined as a process in which the laser beam makes slight sideways movements along the line it follows) at a frequency of 100 Hz and with a diameter of 3 mm.

In this example (with a 3 mm diameter laser beam and a piece displacement speed in the kiln of 8.5 m per hour), the laser beam acts on each specific point of the piece for 1.2 seconds.

During heat treatment without laser radiation, the maximum temperature achieved in the specimen is 450 °C, whereas by adding the action of the laser, surface temperature on the sample reaches 980 °C at the beginning of the treatment and increases progressively up to 990 °C at the end of the step. Under these conditions, the surface takes on a bright appearance both in the undecorated areas and in those where the black and blue inks were applied.

All information relating to examples or embodiments forms part of the description of the invention.

## Claims

1. A procedure for decorating ceramic materials produced with inorganic polymers **characterised in that** it comprises
a forming stage (1) of the ceramic piece,
a preparation stage (2) of the decorative coating,
a heat treatment stage (3), wherein the ceramic material is fired, and
a local radiation stage (4) carried out during the heat treatment stage coinciding with when the piece passes through the part of the kiln with the highest temperature, whereupon an increase in surface temperature occurs, thus firing the decorative coating; the heat treatment stage and local radiation stage are carried out in a mixed ceramic kiln (5), wherein the local radiation comprises electromagnetic radiation, wherein the heat treatment stage (3) is carried out at temperatures of between 600 °C and 800 °C and wherein the radiation stage (4) is carried out by generating a surface temperature on the piece of between 1050 °C and 1200 °C.

2. A procedure for decorating ceramic materials produced with inorganic polymers according to the preceding claim, **wherein** in the forming stage (1), a piece of ceramic material is made from an inorganic polymer by any process currently in use in the ceramics industry, selected from the group formed by moulding, dry-pressing, semi-plastic pressing and extrusion.

3. A procedure for decorating ceramic materials produced with inorganic polymers according to the previous claims, **wherein** in the forming stage (1), a piece of ceramic material is formed by an alkaline activation process of metaclays, which comprises extrusion, low temperature curing, and drying of an inorganic polymer consisting of a silico-aluminous material that includes metaclays and optionally pozzolanic materials, with an activator solution.

4. A procedure for decorating ceramic materials produced with inorganic polymers according to the preceding claims, **wherein** in the coating preparation stage (2), a coating is obtained that is applied to the piece in different layers of glazes selected from the group formed by enamels, engobes, frits, inks or a combination thereof.

5. A procedure for decorating ceramic materials produced with inorganic polymers according to the preceding claims, **wherein** the mixed ceramic kiln (5) used comprises a ceramic kiln (6) with linear displacement of the piece, which is equipped with at least one radiation heating module (7) placed in the part with highest temperature of the ceramic kiln (6).

6. A procedure for decorating ceramic materials produced with inorganic polymers according to the preceding claims, **wherein** the ceramic kiln (6) in the mixed ceramic kiln (5) is of any type used in the ceramics industry and can be selected from the group formed by gas-fired, electric or microwave kilns.

7. A procedure for decorating ceramic materials produced with inorganic polymers according to claim 5, **wherein** the radiation heating module (7) in the mixed ceramic kiln (5) operates with electromagnetic radiation and can be selected from the group formed by laser, UV ultraviolet, IR infrared, microwave, RF radiofrequency or a combination of several of the above.

8. A procedure for decorating ceramic materials produced with inorganic polymers according to the preceding claims, **wherein** the mixed ceramic kiln (5) is a mixed kiln with laser radiation scanning.

## Patentansprüche

1. Verfahren zum Dekorieren von mit anorganischen Polymeren hergestellten keramischen Materialien, **dadurch gekennzeichnet, dass** es folgendes aufweist:
eine Formgebungsstufe (1) des Keramikstücks,
eine Vorbereitungsstufe (2) der dekorativen Beschichtung,
eine Wärmebehandlungsstufe (3), in der das keramische Material gebrannt wird, und
eine lokale Bestrahlungsstufe (4), die während der Wärmebehandlungsstufe durchgeführt wird, die mit dem Durchgang des Stücks durch den Teil des Ofens mit der höchsten Temperatur zusammenfällt, woraufhin ein Anstieg der Oberflächentemperatur auftritt, wodurch die dekorative Beschichtung gebrannt wird; wobei die Wärmebehandlungsstufe und die lokale Bestrahlungsstufe in einem gemischten Keramikofen (5) durchgeführt werden, wobei die lokale Bestrahlung elektromagnetische Strahlung aufweist, wobei die Wärmebehandlungsstufe (3) bei Temperaturen zwischen 600 °C und 800 °C durchgeführt wird und wobei die Bestrahlungsstufe (4) durch Erzeugen einer Oberflächentemperatur auf dem Stück zwischen 1050 °C und 1200 °C durchgeführt wird.

2. Verfahren zum Dekorieren von mit anorganischen Polymeren hergestellten keramischen Materialien nach dem vorhergehenden Anspruch, wobei in der Formgebungsstufe (1) ein Stück keramisches Material aus einem anorganischen Polymer durch ein beliebiges, derzeit in der Keramikindustrie verwendetes Verfahren hergestellt wird, ausgewählt aus Gießen, Trockenpressen, halbplastisches Pressen und Strangpressen.

3. Verfahren zum Dekorieren von mit anorganischen Polymeren hergestellten keramischen Materialien gemäß den vorhergehenden Ansprüchen, wobei in der Formgebungsstufe (1) ein Stück keramisches Material durch ein alkalisches Aktivierungsverfahren von Metaclays gebildet wird, das Extrusion, Aushärtung bei niedriger Temperatur und Trocknung eines anorganischen Polymers, das aus einem silicoaluminösen Material besteht, das Metaclays und gegebenenfalls puzzolanische Materialien enthält, mit einer Aktivatorlösung aufweist.

4. Verfahren zum Dekorieren von mit anorganischen Polymeren hergestellten keramischen Materialien nach den vorhergehenden Ansprüchen, wobei in der Beschichtungsvorbereitungsstufe (2) eine Beschichtung erhalten wird, die auf das Stück in verschiedenen Schichten von Glasuren aufgetragen wird, die aus der Gruppe ausgewählt sind, die durch Emaillen, Engoben, Fritten, Tinten oder eine Kombination davon gebildet wird.

5. Verfahren zum Dekorieren von mit anorganischen Polymeren hergestellten keramischen Materialien nach den vorhergehenden Ansprüchen, wobei der verwendete gemischte Keramikofen(5) einen Keramikofen (6) mit linearer Verschiebung des Stücks umfasst, der mit mindestens einem Strahlungsheizmodul (7) ausgestattet ist, das in dem Teil mit der höchsten Temperatur des Keramikofens (6) angeordnet ist.

6. Verfahren zum Dekorieren von mit anorganischen Polymeren hergestellten keramischen Materialien nach den vorhergehenden Ansprüchen, wobei der Keramikofen (6) in dem gemischten Keramikofen (5) von einem beliebigen Typ ist, der in der Keramikindustrie verwendet wird, und aus der Gruppe ausgewählt werden kann, die durch gasbeheizte, elektrische oder Mikrowellen-Brennöfen gebildet wird.

7. Verfahren zum Dekorieren von mit anorganischen Polymeren hergestellten keramischen Materialien nach Anspruch 5, wobei das Strahlungsheizmodul (7) in dem gemischten Keramikofen (5) mit elektromagnetischer Strahlung arbeitet und aus der Gruppe ausgewählt werden kann, die durch Laser, UV-Ultraviolett, IR-Infrarot, Mikrowelle, RF-Radiofrequenz oder eine Kombination von mehreren der oben genannten gebildet wird.

8. Verfahren zum Dekorieren von mit anorganischen Polymeren hergestellten keramischen Materialien nach den vorhergehenden Ansprüchen, wobei der gemischte Keramikofen (5) ein gemischter Ofen mit Laserstrahlabtastung ist.

## Revendications

1. Un procédé de décoration de matériaux céramiques produits avec des polymères inorganiques, **caractérisé en ce qu'il comprend**
une étape de formation (1) de la pièce céramique,
une étape de préparation (2) du revêtement décoratif,
une étape de traitement thermique (3), dans laquelle le matériau céramique est cuit, et
une étape de rayonnement local (4) effectuée pendant l'étape de traitement thermique coïncidant avec le moment où la pièce passe à travers la partie du four présentant la température la plus élevée, à la suite de quoi une augmentation de la température de surface se produit, cuisant ainsi le revêtement décoratif ; l'étape de traitement thermique et l'étape de rayonnement local sont effectuées dans un four à céramique mixte (5), étant précisé que le rayonnement local comprend un rayonnement électromagnétique, étant précisé que l'étape de traitement thermique (3) est effectuée à des températures comprises entre 600°C et 800°C et étant précisé que l'étape de rayonnement (4) est effectuée en générant une température de surface sur la pièce comprise entre 1050°C et 1200°C.

2. Un procédé pour décorer des matériaux céramiques produits avec des polymères inorganiques conformément à la Revendication précédente, **étant précisé que** dans l'étape de formation (1), une pièce de matériau céramique est fabriquée à partir d'un polymère inorganique par tout procédé actuellement utilisé dans l'industrie céramique, choisi dans le groupe formé par le moulage, le pressage à sec, le pressage semi-plastique et l'extrusion.

3. Un procédé de décoration de matériaux céramiques produits avec des polymères inorganiques conformément aux Revendications précédentes, **étant précisé que** dans l'étape de formation (1), une pièce de matériau céramique est formée par un procédé d'activation alcaline de méta-clays, qui comprend l'extrusion, le durcissement à basse température et le séchage d'un polymère inorganique constitué d'un matériau silico-alumineux qui comprend les méta-clays et éventuellement des matériaux pouzzolaniques, avec une solution d'activateur.

4. Un procédé de décoration de matériaux céramiques produits avec des polymères inorganiques conformément aux Revendications précédentes, **étant précisé que** dans l'étape de préparation du revêtement (2), on obtient un revêtement qui est appliqué sur la pièce en différentes couches d'émaux choisis dans le groupe formé par les émaux, les engobes, les frittes, les encres ou une combinaison de ceux-ci.

5. Un procédé de décoration de matériaux céramiques produits avec des polymères inorganiques conformément aux revendications précédentes, **étant précisé que** le four céramique mixte (5) utilisé comprend un four céramique (6) à déplacement linéaire de la pièce, qui est équipé d'au moins un module de chauffage par rayonnement (7) placé dans la partie présentant la plus haute température du four céramique (6).

6. Un procédé de décoration de matériaux céramiques produits avec des polymères inorganiques conformément aux Revendications précédentes, **étant précisé que** le four à céramique (6) dans le four à céramique mixte (5) est de n'importe quel type utilisé dans l'industrie céramique et peut être choisi dans le groupe formé par les fours à gaz, électriques ou à micro-ondes.

7. Un procédé de décoration de matériaux céramiques produits avec des polymères inorganiques conformément à la Revendication 5, **étant précisé que** le module de chauffage par rayonnement (7) dans le four à céramique mixte (5) fonctionne avec un rayonnement électromagnétique et peut être choisi dans le groupe formé par le laser, l'ultraviolet UV, l'infrarouge IR, les micro-ondes, la radiofréquence RF ou une combinaison de plusieurs des éléments ci-dessus.

8. Un procédé de décoration de matériaux céramiques produits avec des polymères inorganiques conformément aux Revendications précédentes, étant précisé que le four mixte à céramique (5) est un four mixte à balayage par rayonnement laser.
